# FASCICULE DE BREVET EUROPEEN

(11) **EP 2 525 190 B1**
(45) Date de publication et mention de la délivrance du brevet: **04.06.2014**
(21) Numéro de dépôt: 12002686.9
(22) Date de dépôt: 18.04.2012
(51) Int. Cl.: G01C 23/00

(54) **Dispositif et procédé de construction de route aérienne pour atteindre une destination**
Vorrichtung und Verfahren zur Erstellung einer Flugstrecke zum Erreichen eines Ziels
Device and method for building an air route to reach a destination

(30) Priorité: 20.05.2011 FR 1101562
(43) Date de publication de la demande: 21.11.2012
(73) Titulaire: Airbus Helicopters, 13725 Marignane Cedex (FR)
(72) Inventeur: Mandonnaud, François, 45000 Orleans (FR); Garcia, Patrick, 13008 Marseille (FR); Kirchhofer, Alain, 13300 Salon de Provence (FR)
(74) Mandataire: GPI & Associés

(56) Documents cités:
- FR-A1- 2 875 901
- JP-A- 9 254 897
- US-A1- 2006 111 818

## Description

La présente invention concerne un dispositif et un procédé technique de construction de route aérienne pour atteindre une destination.

L'invention se trouve dès lors dans le domaine des systèmes de navigation et de gestion du vol d'un aéronef, et plus particulièrement d'un hélicoptère, qui recouvre usuellement les fonctions de préparation d'un plan de vol et d'élaboration d'une trajectoire.

Il est à noter que l'on entend par « plan de vol » une route aérienne théorique que doit suivre un aéronef pour rallier une destination, en passant par une pluralité de points de passage dénommés « waypoints » en langue anglaise. La route aérienne comprend alors au moins un segment reliant deux points de passage successifs.

Chaque segment est ainsi associé à une altitude de vol voire à une vitesse d'avancement, à une phase de vol et à une largeur, pour définir un couloir de vol à emprunter pour aller d'un point de passage vers un autre point de passage.

Il est à noter que le document FR 2 875 901 propose notamment de superposer sur une vue cartographique au moins un segment d'une route aérienne, ainsi que la représentation des zones géographiques susceptibles d'être dangereuses pour l'aéronef.

Dès lors, on comprend que l'état de la technique inclut des systèmes embarqués dans un aéronef ou pouvant être embarqués dans un aéronef pour construire une route aérienne sûre.

Toutefois, un tel système ne prend pas en considération le volume sonore émis par un aéronef.

Pourtant, cette contrainte n'est pas négligeable. En effet, les vols d'aéronefs à proximité de sites urbains à forte densité de population mais aussi de sites résidentiels ou touristiques relativement moins denses se multiplient. Par conséquent, les autorités compétentes tendent à prendre des mesures législatives pour lutter contre les nuisances sonores provoquées par des aéronefs. Certaines décisions visent ainsi à réduire le trafic aérien aux alentours de sites prédéterminés.

Un pilote ne respectant pas la législation peut être amené à s'expliquer sur les raisons l'ayant conduit à enfreindre les règles établies, et peut éventuellement être sanctionné.

On note que la contrainte sonore est particulièrement applicable aux giravions qui sont amenés à voler à basse altitude, les avions volant souvent à des altitudes suffisamment élevées pour ne pas générer de nuisances sonores notables et durables au niveau du sol survolé.

On connaît alors des dispositifs utilisés en temps réel en vol pour aider un pilote à respecter la législation en manière d'émission de bruit.

Le document FR 2 868 561 vise ainsi un procédé et un dispositif pour minimiser le bruit émis pendant le décollage et l'atterrissage d'un giravion.

Le document W02008/112530 présente un dispositif agissant sur la puissance d'un moteur en phase de décollage pour réduire le bruit émis par un avion au sol.

Le document FR 2 906 912 propose un procédé et un dispositif pour déterminer le niveau de gêne sonore à l'extérieur d'un aéronef.

Le document US 7 383 104 suggère de calculer le bruit généré par un aéronef en prenant en considération des conditions environnementales.

Le document US 2011/0001637 a pour objet une méthode pour déterminer le niveau de bruit d'un aéronef à voilure tournante. Selon cette méthode, on utilise un couple d'un dispositif de transmission pour déterminer ce niveau de bruit.

Par ailleurs, on connaît aussi les documents US 2006/111818 et JP 9 254897.

Ainsi, l'état de la technique décrit d'une part des procédés et des dispositifs pour établir une route aérienne, et d'autre part des procédés et dispositifs pour signaler en temps réel à un pilote le bruit émis par l'aéronef voire pour établir des procédures de vol à moindre bruit notamment au décollage et à l'atterrissage.

Par suite pour rallier une destination, le pilote suit les différents segments de sa route aérienne, et contrôle le bruit émis pour tenter de respecter la réglementation en matière de nuisances sonores.

De plus, on rappelle que le pilotage d'un avion et plus particulièrement d'un hélicoptère est un exercice compliqué.

En effet, un hélicoptère répond rapidement et vivement aux ordres de pilotage donnés par le pilote au travers des commandes de vol, la maniabilité d'un hélicoptère étant en outre élevée. De plus, les techniques de pilotage varient en fonction des phases de vol, ces techniques étant par exemple différentes entre une phase de vol à basse vitesse et une phase de vol de croisière.

Un hélicoptère requiert donc un pilotage attentif impliquant des actes correctifs précis devant être effectués sans retard. La charge de travail d'un pilote d'aéronef, et plus particulièrement d'un hélicoptère est donc très importante.

On comprend que les pilotes et les constructeurs d'aéronef se trouvent confrontés à un problème technique particulièrement difficile à résoudre, pour rallier une destination en émettant un bruit modéré à la verticale de certains sites, à savoir un bruit inférieur à un seuil générant une empreinte sonore réduite ou nulle au sol. Il est effectivement difficile pour un pilote de détourner son attention du pilotage pour prendre en considération des informations relatives au bruit émis par l'aéronef.

De plus, on note que durant un vol, la liberté d'action d'un pilote est parfois limitée, par exemple par le volume de carburant disponible. En fonction de ce volume et de la consommation en carburant de l'installation, le pilote n'est parfois pas en mesure de contourner un site imposant une législation stricte en matière de nuisances sonores sans mettre en péril la mission.

Selon un point de vue extrême, la gestion en temps réel du bruit par un pilote occupé par ailleurs à des tâches vitales pour contrôler l'aéronef peut s'avérer dangereuse, ce pilote pouvant se détourner de sa route aérienne pour limiter l'émission de bruit au dessus d'un site au détriment de la sécurité.

La présente invention a alors pour objet de proposer un dispositif pour définir une route aérienne et rallier une destination avec un aéronef pour minimiser les nuisances sonores générées par l'aéronef, ce dispositif ayant un impact minime sur la charge de travail d'un pilote en vol.

Selon l'invention, un dispositif pour définir une route aérienne et rallier une destination avec un aéronef comprend un modèle numérique de terrain ainsi qu'un écran de visualisation, ce dispositif étant pourvu d'un moyen d'élaboration d'une route aérienne comprenant au moins un segment de vol associé à une altitude de vol. On se référera à la littérature pour obtenir des informations sur un moyen d'élaboration d'une route aérienne sécurisée pourvue d'au moins un segment d'une largeur de couloir donnée.

Ce dispositif est notamment remarquable en ce qu'il comporte une base de données de bruit numérique incluant des volumes à éviter dans lesquels un aéronef doit éviter de pénétrer pour ne pas générer un bruit indu au sol au niveau de sites prédéterminés, ce dispositif ayant de plus un calculateur pourvu d'une mémoire principale contenant des instructions pour afficher sur l'écran de visualisation et en surimpression par rapport à une première représentation dudit terrain fournie par le modèle numérique de terrain :
- une deuxième représentation des volumes à éviter, et
- une route aérienne élaborée en utilisant le moyen d'élaboration.

Il est à noter que l'on entend donc par « volume à éviter » un volume dans lequel l'aéronef émet un bruit générant une empreinte sonore au sol contraire à la législation en vigueur ou toute autre restriction locale.

Dès lors, ce dispositif peut être embarqué dans un aéronef, et peut être mis en oeuvre par un pilote avant le début du vol ou pendant le vol.

Par exemple, le pilote utilise le moyen d'élaboration pour construire une route aérienne sécurisée, suivant l'enseignement du document FR 2 875 901 éventuellement. Le calculateur affiche alors une deuxième représentation des volumes à éviter dans lesquels l'aéronef doit générer une empreinte sonore au sol réduite voire nulle. Cette deuxième représentation peut être représentée de manière tridimensionnelle ou bidimensionnelle suivant la réalisation.

Si le pilote constate que la route aérienne sécurisée élaborée est incompatible avec la législation, il est alors à même de la modifier.

Le dispositif est ainsi très utile car il permet au pilote de résoudre un problème technique délicat, à savoir la réduction de l'empreinte sonore au sol de l'aéronef dans certains sites géographiques sans alourdir sa charge de travail. Ce dispositif réalise alors concrètement des opérations qu'un pilote n'est pas en mesure de faire, d'autant plus lorsque ce pilote manoeuvre un aéronef.

En effet, on comprend que le dispositif peut être utilisé avant le vol et n'induit donc pas une surcharge de travail en vol. Eventuellement, si le pilote doit modifier sa route aérienne en vol, il peut temporairement élaborer une nouvelle route aérienne sécurisée à l'aide du dispositif selon l'invention, durant un vol stationnaire par exemple avec un hélicoptère, avant de suivre cette route aérienne en consacrant toute son attention au pilotage en tant que tel.

Il est à noter que le dispositif peut prévoir l'affichage de plusieurs représentations du terrain.

Par exemple, il est possible de superposer la route aérienne élaborée et la deuxième représentation des volumes à éviter sur une première carte faisant apparaître le nom des agglomérations survolées, et/ou sur une deuxième carte mettant en évidence le relief survolé.

De même, il est possible de superposer la route aérienne élaborée et la deuxième représentation des volumes à éviter sur une seule carte faisant apparaître de multiples informations, telles que le nom des agglomérations survolées et le relief survolé par exemple.

Le dispositif peut aussi comporter une ou plusieurs des caractéristiques qui suivent.

Par exemple, en exécutant les instructions stockées dans sa mémoire principale, le calculateur peut déterminer si un segment est un segment à risque traversant un volume à éviter.

Selon un premier mode de réalisation, le dispositif affiche la route aérienne sécurisée ainsi que les différents volumes à éviter dans un espace tridimensionnel.

Selon un deuxième mode de réalisation, le dispositif affiche la route aérienne sécurisée ainsi que les différents volumes à éviter dans un espace bidimensionnel.

Dès lors, en exécutant les instructions, chaque segment de vol étant notamment associé à une altitude de vol, le calculateur affiche sur l'écran de visualisation une deuxième représentation en deux dimensions d'une section des volumes à éviter à l'altitude de vol.

Le dispositif affiche alors uniquement les sections des volumes à éviter se trouvant à l'altitude de vol de l'aéronef. En conséquence, lorsqu'un segment se trouve à l'aplomb d'un volume à éviter donné, le calculateur n'affiche aucune information relative à ce volume à éviter donné, à l'instar de la méthode appliquée par le document FR 2 875 901 pour la détermination de reliefs susceptibles d'être dangereux.

Par suite, le calculateur affiche sur l'écran de visualisation les volumes à éviter qui émergent à l'altitude des segments de la route aérienne sécurisée construite. En fonction des interférences constatées, l'opérateur peut modifier la route aérienne sécurisée construite pour au moins limiter les interférences.

Par ailleurs, le dispositif comportant une base de données de consignes de vol, en exécutant les instructions mémorisées, le calculateur détermine si un segment d'une route aérienne élaborée est un segment à risque, c'est à dire traversant un volume à éviter, et affiche une information relative à une consigne de vol à appliquer lors du parcours du segment à risque.

Lorsque l'aéronef décolle ou atterrit dans un secteur à forte densité de population associé de fait à un volume à éviter, le dispositif affiche un symbole sur le secteur à risque faisant référence à des consignes de vol à bruit modéré prédéterminées pour limiter l'impact sonore de l'aéronef dans un site protégé par la législation. Ces consignes de vol peuvent inclure des consignes en tant que telles, ou encore des procédures de vol.

Selon un autre aspect, le dispositif peut comporter une base de données appareil fournie par le constructeur d'un aéronef caractérisant le bruit généré par cet aéronef et une base de données législative contenant la réglementation à respecter en matière d'émission de bruit. En exécutant les instructions mémorisées dans sa mémoire principale, le calculateur élabore la base de données de bruit à partir de la base de données appareil et de la base de données législative.

Par exemple, la base de données législative fournit les coordonnées géographiques de sites protégés ne devant pas être soumis à des nuisances sonores. La base de données appareil caractérise le bruit émis par un aéronef donné, par exemple sous la forme d'une sphère entourant l'aéronef. Le calculateur en déduit la base de données de bruit, les différents volumes à éviter correspondant à des portions de l'espace aérien dans lesquelles l'évolution de l'aéronef induit une nuisance sonore indue au sol.

On comprend qu'un constructeur peut réaliser une base de données appareil pour chaque version des aéronefs de sa flotte.

De plus, le dispositif peut comporter une base de données météorologique. En exécutant les instructions stockées dans sa mémoire principale, le calculateur élabore la base de données de bruit à partir de la base de données appareil ainsi que de la base de données législative et de la base de données météorologique.

Le calculateur détermine alors les volumes à éviter, en déterminant par exemple des dômes de bruit à l'aplomb de sites protégés mémorisés dans la base de données législative, puis déforme lesdits dômes pour obtenir les volumes à éviter en fonction des données météorologiques telle que la direction et la vitesse du vent.

Par ailleurs, le dispositif comporte éventuellement une mémoire secondaire, la route aérienne élaborée et la deuxième représentation des volumes à éviter étant mémorisées dans cette mémoire secondaire.

En effet, il est possible qu'un pilote ne puisse pas éviter un volume à éviter, l'aéronef ne possédant par exemple pas suffisamment de carburant pour contourner un volume à éviter donné.

Dès lors, les autorités compétentes sont susceptibles de demander des explications au pilote. Le pilote peut résoudre concrètement ce problème technique délicat pour justifier ses choix en fournissant la route aérienne sécurisée élaborées et les raisons l'ayant amené à ne pas modifier ladite route aérienne.

Outre un dispositif, l'invention concerne aussi un aéronef comportant ce dispositif.

De même, l'invention vise un procédé pour définir une route aérienne et rallier une destination à partir d'une route aérienne comprenant au moins un segment associé à une altitude de vol en utilisant un modèle numérique de terrain ainsi qu'un écran de visualisation, et un moyen d'élaboration de cette route aérienne.

Ce procédé est notamment remarquable en ce que :
- une route aérienne élaborée est construite durant une étape de construction de route aérienne par le moyen d'élaboration manoeuvré par un opérateur,
- des volumes à éviter dans lesquels un aéronef doit éviter de pénétrer pour ne pas générer un bruit indu au sol au niveau de sites prédéterminés et la route aérienne élaborée sont affichés sur un écran de visualisation et en surimpression par rapport à une première représentation d'un terrain durant une étape de comparaison mise en oeuvre par un calculateur.

Eventuellement, une route aérienne alternative est construite lorsque la route aérienne élaborée et l'emplacement des volumes à éviter sont incompatibles.

Un aéronef rallie alors une destination en suivant la route aérienne finale sélectionnée par le pilote, à savoir la route aérienne élaborée initiale ou une route aérienne alternative.

Ce procédé peut comporter une ou plusieurs des caractéristiques alternatives suivantes.

Selon une variante :
- ladite route aérienne élaborée est construite à l'aide du moyen d'élaboration,
- un calculateur pourvu d'une mémoire principale contenant des instructions exécute ces instructions pour afficher des volumes à éviter et la route aérienne élaborée sur l'écran de visualisation et en surimpression par rapport à une première représentation d'un terrain fournie par un modèle numérique de terrain, ce calculateur utilisant une base de données de bruit numérique incluant des volumes à éviter dans lesquels un aéronef doit éviter de pénétrer pour ne pas générer un bruit indu au sol au niveau de sites prédéterminés afin de déterminer et afficher les volumes à éviter sur la première représentation du terrain.

Selon un autre aspect, un segment étant notamment associé à une altitude de vol, une deuxième représentation en deux dimensions d'une section des volumes à éviter à ladite altitude de vol est affichée sur ledit écran de visualisation par un calculateur exécutant des instructions mémorisées.

Par ailleurs, une information relative à une consigne de vol à appliquer lors du suivi d'un segment à risque est affichée sur ledit écran de visualisation, cette information relative à une consigne de vol étant extraite d'une base de données de consignes de vol par un calculateur exécutant des instructions mémorisées.

En outre, la base de données de bruit peut être une base prédéfinie par le constructeur.

Selon une variante, la base de données de bruit est élaborée à partir d'une base de données appareil caractérisant le bruit généré par un aéronef et d'une base de données législative contenant la réglementation à respecter en matière d'émission de bruit par un calculateur exécutant des instructions mémorisées.

Selon une autre variante, la base de données de bruit est élaborée à partir d'une base de données appareil caractérisant le bruit généré par un aéronef ainsi qu'à partir d'une base de données législative contenant la réglementation à respecter en matière d'émission de bruit et d'une base de données météorologique par un calculateur exécutant des instructions mémorisées. On comprend que la base de données météorologique comprend des informations relatives à la météorologie au moment du vol à venir.

L'invention et ses avantages apparaîtront avec plus de détails dans le cadre de la description qui suit avec des exemples de réalisation donnés à titre illustratif en référence aux figures annexées qui représentent :
- la figure 1, un schéma d'un dispositif selon l'invention,
- la figure 2, un affichage en trois dimensions d'une route aérienne et de volumes à éviter,
- la figure 3, un affichage en deux dimensions d'une route aérienne et de volumes à éviter, et
- les figures 4 et 5, des schémas explicitant l'invention.

Les éléments présents dans plusieurs figures distinctes sont affectés d'une seule et même référence.

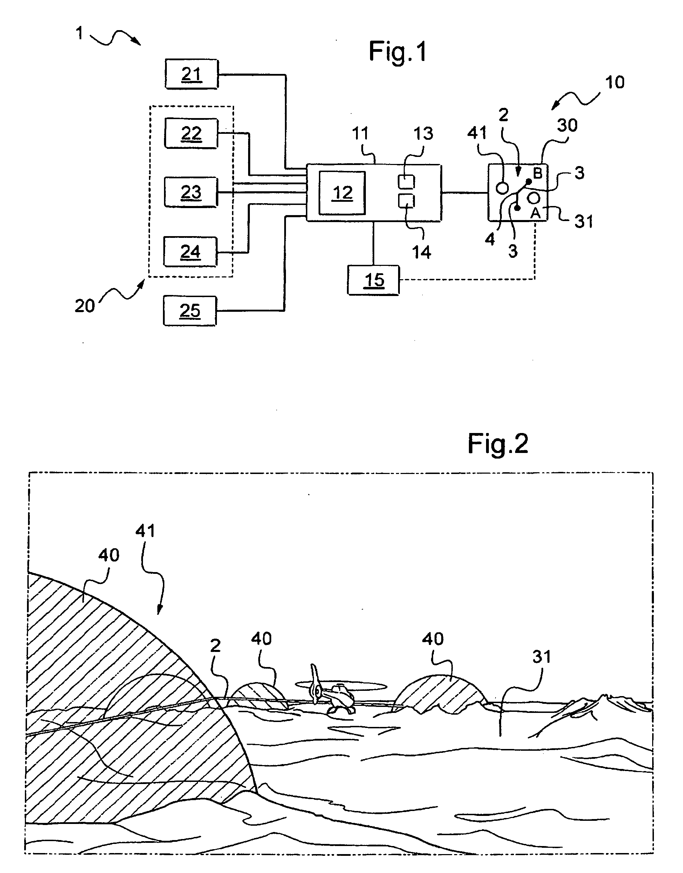

La figure 1 présente un dispositif 10 pour définir une route aérienne 2 afin de rallier une destination B à parti d'un point de départ A. Ce dispositif 10 peut être installé à demeure dans un aéronef 1, ou peut être déplaçable de manière à être embarqué temporairement dans un tel aéronef 1. On comprend que le dispositif 10 peut être un ordinateur portable ou équivalent, une tablette tactile par exemple.

L'aéronef 1 présenté n'est pas schématisé dans son ensemble afin de ne pas alourdir inutilement la figure 1.

Le dispositif 10 comprend un écran de visualisation 30 ainsi qu'un moyen d'élaboration 15 d'une route aérienne. En vol ou au sol, un opérateur positionne alors une pluralité de points de passage 4 pour bâtir une route aérienne allant du point de départ A vers la destination B, la route aérienne comportant au moins un segment 3 entre deux points de passage.

Chaque segment 3 est associé à une largeur de couloir dans lequel peut évoluer l'aéronef 1, ainsi qu'à une altitude de vol voire à une phase de vol. Un segment peut être associé à une altitude constante, ou encore à une altitude variable.

On se référera à la littérature pour obtenir des compléments d'informations relatifs au moyen d'élaboration d'une route aérienne segmentée.

Le moyen d'élaboration 15 est avantageusement, mais non obligatoirement, relié à un calculateur 11 du dispositif 10.

Ce calculateur inclut un processeur 12, ainsi qu'une mémoire principale 13 voire une mémoire secondaire 14. On comprend que la mémoire principale 13 et la mémoire secondaire 14 peuvent former une seule et même mémoire.

La mémoire principale 13 contient alors des instructions exécutables par le processeur 12, la mémoire secondaire 14 servant d'unité de stockage.

Le processeur 12 exécute en effet les instructions de la mémoire principale 13, pour afficher sur l'écran de visualisation et en surimpression par rapport à une première représentation 31 d'un terrain :
- des deuxièmes représentations 41 de volumes à éviter, et
- la route aérienne 2.

Par suite, le calculateur coopère à minima avec une base de données numérique incluant un modèle numérique de terrain 21, ainsi qu'avec une base de données de bruit 20, voire avec une base de données de consignes de vol 25 stockée dans une ou plusieurs mémoires du dispositif 10.

Le modèle numérique de terrain 21 fournit au calculateur des données relatives au terrain que doit survoler l'aéronef pour atteindre sa destination.

Par ailleurs, la base de données de consignes de vol 25 fournit au calculateur des données relatives à des procédures de vol dans des situations prédéterminées.

Enfin, la base de données de bruit 20 transmet au calculateur 11 des données relatives à la localisation et la géométrie de volumes à éviter. Chaque volume à éviter représente une portion de l'espace aérien dans laquelle un aéronef ne doit normalement pas pénétrer, afin de ne pas générer un bruit indu au sol au niveau de sites prédéterminés par la législation.

Il est à noter que le calculateur peut établir cette base de données de bruit 20 à partir d'une base de données appareil 22 et d'une base de données législative 23.

Par exemple, la base de données législative 23 inclut les coordonnées de sites protégés ne devant pas être soumis à des nuisances sonores.

De plus, la base de données appareil 22 caractérise le bruit émis par un aéronef. Par exemple, cette base de données indique qu'un aéronef volant à une altitude donnée génère un bruit indu, dans un volume délimité par une sphère d'un rayon donné.

Le processeur 12 exécute alors des instructions stockées dans la mémoire principale 13, pour combiner les enseignements de la base de données appareil 22 et de la base de données législative 23 afin de déterminer la localisation et la forme de volumes à éviter que l'aéronef doit éviter pour respecter la législation.

Par exemple, chaque volume à éviter peut être un volume ayant la forme d'une demi-sphère centrée sur chacun desdits sites protégés.

On note que la base de données législative 23 peut interdire le survol d'un site. Cet espace aérien interdit de vol est alors représenté par un volume s'étendant en élévation à partir du sol sur une hauteur supérieure à l'altitude de vol maximale de l'aéronef voire sur une hauteur « infinie », en forme de cylindre par exemple.

Cependant, le calculateur 11 peut aussi utiliser une base de données météorologique 24 pour prendre en considération les caractéristiques météorologiques lors de l'élaboration des volumes à éviter.

Par exemple, en fonction de la direction et de la vitesse du vent prévues lors du vol, le calculateur 11 adapte la géométrie des volumes à éviter déterminés à l'aide de la base de données appareil 22 et de la base de données législative 23.

Selon le procédé mis en oeuvre par le dispositif 10, au sol ou en vol pendant une phase de vol ne nécessitant pas nécessairement toute l'attention d'un pilote, durant une étape de construction de route, une route aérienne est élaborée par un opérateur utilisant le moyen d'élaboration pour rallier une destination B.

Durant une étape de comparaison, des volumes à éviter sont déterminés. L'écran de visualisation affichant une première représentation 31 d'un modèle numérique de terrain, on affiche en surimpression par rapport à cette première représentation d'une part la route aérienne élaborée 2 et d'autre part une deuxième représentation 41 des volumes à éviter 40.

Par exemple, cette étape de comparaison est mise en oeuvre par le calculateur 11 sur ordre de l'opérateur, le processeur 12 appliquant des instructions de la mémoire principale 13 pour obtenir l'affichage requis.

En référence à la figure 2, selon un premier mode de réalisation, le calculateur requiert l'affichage de la première représentation 31 et de la deuxième représentation 41 en trois dimensions. La figure 2 présente notamment divers volumes à éviter 40 en forme de dôme.

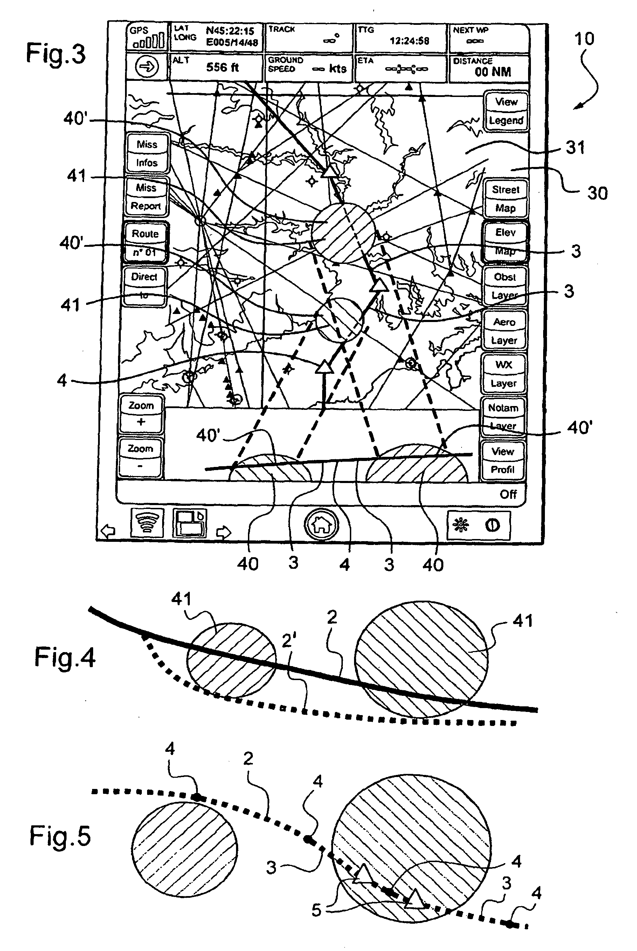

En référence à la figure 3, selon un deuxième mode de réalisation, le calculateur requiert l'affichage de la première représentation 31 et de la deuxième représentation 41 en deux dimensions.

Chaque segment 3, séparant deux points de passage 4, étant associé à une altitude de vol, on peut uniquement afficher une représentation de la section 40' des volumes à éviter se trouvant à l'altitude de vol de l'aéronef, à savoir à l'altitude d'au moins un segment 3 de la route aérienne 2.

Plus particulièrement, il est possible de limiter l'affichage aux sections 40' traversées par un segment 3 dénommé par commodité segment à risque, à l'instar de l'exemple de la figure 3.

Dès lors, le calculateur 11 requiert l'affichage de la deuxième représentation 41 desdites sections 40' dans un espace bidimensionnel.

Par ailleurs, en référence à la figure 5, si un segment de la route aérienne 2 est un segment à risque traversant un volume à éviter, une information 5 relative à une consigne de vol à appliquer lors du suivi d'un segment à risque est affichée sur l'écran de visualisation 30. Cette information peut être un symbole matérialisant la nécessité d'appliquer une procédure spécifique de vol lors du parcours de ce segment 3.

En référence à la figure 4, un opérateur peut aussi élaborer une route aérienne alternative 2' lorsque la route aérienne élaborée 2 et l'emplacement des volumes à éviter 40 sont incompatibles.

Par ailleurs, en référence à la figure 1, le dispositif 10 peut inclure une mémoire secondaire 14, telle qu'une mémoire du calculateur 11, pour mémoriser les routes réalisées à l'aide de ce dispositif ainsi que les volumes à éviter associés. Par exemple, le calculateur mémorise la première représentation du terrain sur laquelle sont affichées en surimpression la deuxième représentation 41 des volumes à éviter 40 et une route aérienne.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, tel que défini par les revendications qui suivent.

## Revendications

1. Dispositif (10) pour définir une route aérienne (2) et rallier une destination (11) avec un aéronef (1) comprenant un modèle numérique de terrain (21) ainsi qu'un écran de visualisation (30), ledit dispositif (10) étant pourvu d'un moyen d'élaboration (15) d'une route aérienne (2) comprenant au moins un segment (3) de vol associé à une altitude de vol,
**caractérisé en ce qu'**il comporte une base de données de bruit (20) numérique incluant des volumes à éviter (40) dans lesquels un aéronef (1) doit éviter de pénétrer pour ne pas générer un bruit indu au sol au niveau de sites prédéterminés, ledit dispositif (10) ayant un calculateur (11) pourvu d'une mémoire principale (13) contenant des instructions pour afficher sur ledit écran de visualisation (30) et en surimpression par rapport à une première représentation (31) dudit terrain fournie par ledit modèle numérique de terrain (21):
- une deuxième représentation (41) desdits volumes à éviter (40), et
- une route aérienne (2) élaborée en utilisant ledit moyen d'élaboration (15).

2. Dispositif selon la revendication 1,
**caractérisé en ce que**, en exécutant lesdites instructions, ledit calculateur (11) détermine si un segment est un segment à risque traversant un volume à éviter (40).

3. Dispositif selon la revendication 2,
**caractérisé en ce que**, en exécutant lesdites instructions, chaque segment (3) de vol étant associé à une altitude de vol, ledit calculateur (11) affiche sur ledit écran de visualisation (30) une deuxième représentation en deux dimensions d'une section (40') desdits volumes à éviter (40) à ladite altitude de vol.

4. Dispositif selon la revendication 3,
**caractérisé en ce que**, ledit dispositif (10) comportant une base de données de consignes de vol (25), en exécutant lesdites instructions, ledit calculateur (11) détermine si un segment d'une route aérienne élaborée est un segment à risque traversant un volume à éviter et affiche une information (5) relative à une consigne de vol à appliquer lors du parcours dudit segment à risque.

5. Dispositif selon l'une quelconque des revendications 1 à 4,
**caractérisé en ce que**, ledit dispositif (10) comportant une base de données appareil (22) fournie par le constructeur d'un aéronef caractérisant le bruit généré par ledit aéronef et une base de données législative (23) contenant la réglementation à respecter en matière d'émission de bruit, en exécutant lesdites instructions, ledit calculateur (11) élabore ladite base de données de bruit (20) à partir de ladite base de données appareil (22) et de ladite base de données législative (23).

6. Dispositif selon la revendication 5,
**caractérisé en ce que**, ledit dispositif (10) comportant une base de données météorologique (24), en exécutant lesdites instructions, ledit calculateur élabore ladite base de données de bruit (20) à partir de ladite base de données appareil (22) ainsi que de ladite base de données législative (23) et de ladite base de données météorologique (24).

7. Dispositif selon l'une quelconque des revendications 1 à 6, **caractérisé en ce que**, ledit dispositif (10) comporte une mémoire secondaire (14), ladite route aérienne élaborée et ladite deuxième représentation desdits volumes à éviter étant mémorisées dans ladite mémoire secondaire (14).

8. Aéronef (1),
**caractérisé en ce qu'**il comporte un dispositif (10) selon l'une quelconque des revendications 1 à 7.

9. Procédé pour définir une route aérienne (2) et rallier une destination (B) à partir d'une route aérienne (2) comprenant au moins un segment (3) associé à une altitude de vol en utilisant un modèle numérique de terrain (21) ainsi qu'un écran de visualisation (30), et un moyen d'élaboration (15) de ladite route aérienne (2),
**caractérisé en ce que** :
- une route aérienne élaborée (2) est construite durant une étape de construction de route aérienne,
- des volumes à éviter (40) dans lesquels un aéronef (1) doit éviter de pénétrer pour ne pas générer un bruit indu au sol au niveau de sites prédéterminés et la route aérienne élaborée (2) sont affichées sur un écran de visualisation (30) et en surimpression par rapport à une première représentation d'un terrain durant une étape de comparaison.

10. Procédé selon la revendication 9,
**caractérisé en ce qu'**une route aérienne alternative (2') est construite lorsque la route aérienne élaborée (2) est l'emplacement des volumes à éviter (40) sont incompatibles.

11. Procédé selon la revendication 9,
**caractérisé en ce que** :
- ladite route aérienne élaborée (2) est construite à l'aide du moyen d'élaboration (15),
- un calculateur (11) pourvu d'une mémoire principale (13) contenant des instructions exécute lesdites instructions pour afficher des volumes à éviter (40) et ladite route aérienne élaborée (2) sur ledit écran de visualisation (30) et en surimpression par rapport à une première représentation d'un terrain fournie par un modèle numérique de terrain (21), ledit calculateur utilisant une base de données de bruit (20) numérique incluant des volumes à éviter (40) pour afficher lesdits volumes à éviter (40) sur ladite représentation.

12. Procédé selon l'une quelconque des revendications 9 à 11,
**caractérisé en ce que**, un segment étant associé à une altitude de vol, une deuxième représentation en deux dimensions d'une section desdits volumes à éviter à ladite altitude de vol est affichée sur ledit écran de visualisation par un calculateur.

13. Procédé selon la revendication 12,
**caractérisé en ce qu'**une information (5) relative à une consigne de vol à appliquer lors du suivi d'un segment à risque est affichée sur ledit écran de visualisation (30), ladite information (5) relative à une consigne de vol étant extraite d'une base de données de consignes de vol (25).

14. Procédé selon la revendication 11,
**caractérisé en ce que** ladite base de données de bruit (20) est élaborée à partir d'une base de données appareil (22) caractérisant le bruit généré par un aéronef et d'une base de données législative (23) contenant la réglementation à respecter en matière d'émission de bruit.

15. Procédé selon la revendication 14,
**caractérisé en ce que** ladite base de données de bruit (20) est élaborée à partir d'une base de données appareil (22) caractérisant le bruit généré par un aéronef ainsi qu'à partir d'une base de données législative (23) contenant la réglementation à respecter en matière d'émission de bruit et d'une base de données météorologique (24).

## Patentansprüche

1. Vorrichtung (10) zur Definition einer Flugstrecke (2) und zum Erreichen eines Ziels (B) mit einem Luftfahrzeug (1), die ein digitales Geländemodell (21) sowie einen Sichtanzeigebildschirm (30) aufweist, wobei die Vorrichtung (10) mit einem Mittel (15) zur Erstellung einer Flugstrecke (2) versehen ist, die mindestens ein Flugsegment (3) aufweist, das mit einer Flughöhe verknüpft ist, **dadurch gekennzeichnet, dass** sie eine digitale Lärmdatenbank (20) aufweist, die zu vermeidende Raumbereiche (40) umfasst, in die ein Luftfahrzeug (1) einzudringen vermeiden muss, um nicht am Boden an vorbestimmten Orten einen unerlaubten Lärm zu erzeugen, wobei die Vorrichtung (10) einen Rechner (11) aufweist, der mit einem Hauptspeicher (13) versehen ist, der Befehle enthält zum Anzeigen auf dem Sichtanzeigebildschirm (30) und zur Überblendung bezüglich einer ersten Darstellung (31) des Geländes, welche von dem digitalen Geländemodell (21) geliefert wird:
- einer zweiten Darstellung (41) der zu vermeidenden Raumbereiche (40), und
- einer Flugstrecke (2), die unter Verwendung des Erstellungsmittels (15) erstellt wird.

2. Vorrichtung nach Anspruch 1,
**dadurch gekennzeichnet, dass** der Rechner (11) während der Ausführung der Befehle bestimmt, ob ein Segment ein Gefahrensegment ist, welches einen zu vermeidenden Raumbereich (40) durchquert.

3. Vorrichtung nach Anspruch 2,
**dadurch gekennzeichnet, dass** während der Ausführung der Befehle jedes Flugsegment (3) mit einer Flughöhe verknüpft wird, wobei der Rechner (11) auf dem Sichtanzeigebildschirm (30) eine zweite zweidimensionale Darstellung eines Abschnitts (40') des bei der Flughöhe zu vermeidenden Raumbereichs (40) darstellt.

4. Vorrichtung nach Anspruch 3,
**dadurch gekennzeichnet, dass** die Vorrichtung (10) eine Datenbank (25) mit Flugvorschriften aufweist, wobei der Rechner (11) während der Ausführung der Befehle bestimmt, ob ein Segment einer erstellten Flugstrecke ein Gefahrensegment ist, welches einen zu vermeidenden Raumbereich durchquert, und eine Information (5) anzeigt bezüglich einer Flugvorschrift, die anzuwenden ist, wenn das Gefahrensegment durchquert wird.

5. Vorrichtung nach einem der Ansprüche 1 bis 4,
**dadurch gekennzeichnet, dass** die Vorrichtung (10) eine Datenbank (22) mit von dem Flugzeughersteller gelieferten Flugzeugdaten aufweist, die den Lärm kennzeichnen, der durch das Flugzeug erzeugt wird, und eine Gesetzesdatenbank (23), die die einzuhaltenden Bestimmungen enthält, die in Sachen Lärmemission einzuhalten sind, wobei der Rechner (11) bei der Ausführung der Befehle die Lärmdatenbank (20) ausgehend von der Datenbank (22) mit Flugzeugdaten und von der Datenbank (23) mit Gesetzesdaten erstellt.

6. Vorrichtung nach Anspruch 5,
**dadurch gekennzeichnet, dass** die Vorrichtung (10) eine Datenbank (24) mit meteorologischen Daten aufweist, wobei der Rechner bei der Ausführung der Befehle die Lärmdatenbank (20) ausgehend von der Datenbank (22) mit Flugzeugdaten sowie der Datenbank (23) mit Gesetzesdaten und der Datenbank (24) mit meteorologischen Daten erstellt.

7. Vorrichtung nach einem der Ansprüche 1 bis 6,
**dadurch gekennzeichnet, dass** die Vorrichtung (10) einen sekundären Speicher (14) aufweist, in dem die erstellte Flugstrecke und die zweite Darstellung der zu vermeidenden Raumbereiche gespeichert sind.

8. Flugzeug (1),
**dadurch gekennzeichnet, dass** es eine Vorrichtung (10) nach einem der Ansprüche 1 bis 7 aufweist.

9. Verfahren zur Definition einer Flugstrecke (2) und zum Erreichen eine Ziels (B) ausgehend von einer Flugstrecke (2), die mindestens ein mit einer Flughöhe verknüpftes Flugsegment (3) aufweist, unter Verwendung eines digitalen Geländemodells (21) sowie eines Sichtanzeigebildschirms (30) und eines Mittels (15) zur Erstellung der Flugstrecke (2),
**dadurch gekennzeichnet, dass**
- eine erstellte Flugstrecke (2) während eines Ausarbeitungsschritts der Flugstrecke ausgearbeitet wird,
- zu vermeidende Raumbereiche (40), in die ein Flugzeug (1) einzudringen vermeiden muss, um nicht einen unerlaubten Lärm am Boden an vorbestimmten Orten zu erzeugen, und die erstellte Flugstrecke (2) auf einem Sichtanzeigebildschirm (30) angezeigt werden unter Überblendung einer ersten Geländedarstellung während eines Vergleichsschritts.

10. Verfahren nach Anspruch 9,
**dadurch gekennzeichnet, dass** eine alternative Flugstrecke (2') erstellt wird, wenn die erstellte Flugstrecke (2) und die Lage der zu vermeidenden Raumbereiche (40) inkompatibel sind.

11. Verfahren nach Anspruch 9,
**dadurch gekennzeichnet, dass**
- die erstellte Flugstrecke (2) mit Hilfe des Erstellungsmittels (15) ausgearbeitet wird,
- ein Rechner (11), der mit einem Hauptspeicher (13) versehen ist, der Befehle enthält, diese Befehle ausführt, um zu vermeidende Raumbereiche (40) und die erstellte Flugstrecke (2) auf dem Sichtanzeigebildschirm (30) anzuzeigen, und indem diese bezüglich einer ersten Darstellung eines Geländes, die von einem digitalen Geländemodell (21) geliefert wird, überblendet werden, wobei der Rechner eine digitale Lärmdatenbank (20) verwendet, die zu vermeidende Raumbereiche (40) enthält, um die zu vermeidenden Raumbereiche (40) auf dieser Darstellung anzuzeigen.

12. Verfahren nach einem der Ansprüche 9 bis 11,
**dadurch gekennzeichnet, dass** ein Segment mit einer Flughöhe verknüpft ist, wobei eine zweite zweidimensionale Darstellung eines Abschnitts des zu vermeidenden Raumbereichs bei der Flughöhe durch den Rechner auf dem Sichtanzeigebildschirm angezeigt wird.

13. Verfahren nach Anspruch 12,
**dadurch gekennzeichnet, dass** eine Information (5) bezüglich einer während der Verfolgung eines Gefahrensegments anzuwendenden Flugvorschrift auf dem Sichtanzeigebildschirm (30) angezeigt wird, wobei die Information (5) bezüglich einer Flugvorschrift einer Datenbank (25) für Flugvorschriften entnommen wird.

14. Verfahren nach Anspruch 11,
**dadurch gekennzeichnet, dass** die Lärmdatenbank (20) erstellt wird ausgehend von einer Datenbank (22) mit Flugzeugdaten, die den von einem Flugzeug erzeugten Lärm charakterisieren, und von einer Gesetzesdatenbank (23), die in Sachen Lärmemission einzuhaltende Bestimmungen enthält.

15. Verfahren nach Anspruch 14,
**dadurch gekennzeichnet, dass** die Lärmdatenbank (20) erstellt wird ausgehend von einer Datenbank (22) mit Flugzeugdaten, die den von einem Flugzeug erzeugten Lärm kennzeichnen, sowie ausgehend von einer Gesetzesdatenbank (23), die in Sachen Lärmemission einzuhaltende Bestimmungen enthält, und ausgehend von einer meteorologischen Datenbank (24).

## Claims

1. A device (10) for defining an air route (2) and reaching a destination (B) with an aircraft (1), comprising a numerical model of the terrain (21) and a display screen (30), the said device (10) being provided with a means for drawing up (15) an air route (2) that comprises at least one flight segment (3) associated with a flight altitude,
**characterised in that** it comprises a numerical database of noise (20) including volumes to be avoided (40), which an aircraft (1) must avoid entering in order not to generate undue noise on the ground at predetermined sites, the said device (10) having a calculator (11) provided with a main memory (13) containing instructions, for displaying, on the said display screen (30) and superimposed relative to a first representation (31) of the said terrain supplied by the said numerical model of the terrain (21):
- a second representation (41) of the said volumes to be avoided (40), and
- an air route (2) drawn up using the said means for drawing up (15).

2. A device according to Claim 1, **characterised in that**, when executing the said instructions, the said calculator (11) determines whether a segment is a risk segment crossing a volume to be avoided (40).

3. A device according to Claim 2, **characterised in that**, when executing the said instructions, each flight segment (3) being associated with a flight altitude, the said calculator (11) displays on the said display screen (30) a second, two-dimensional representation of a section (40') of the said volumes to be avoided (40) at the said flight altitude.

4. A device according to Claim 3, **characterised in that**, the said device (10) comprising a database of flight schedules (25), when executing the said instructions, the said calculator (11) determines whether a segment of an air route which has been drawn up is a risk segment crossing a volume to be avoided, and displays an item of information (5) relating to a flight schedule to be applied when travelling through the said risk segment.

5. A device according to any one of Claims 1 to 4, **characterised in that**, the said device (10) comprising an equipment database (22) supplied by the constructor of an aircraft, characterising the noise generated by the said aircraft, and a database of legislation (23) containing the regulations to be observed in respect of noise emissions, when executing the said instructions, the said calculator (11) draws up the said noise database (20) from the said equipment database (22) and from the said database of legislation (23).

6. A device according to Claim 5, **characterised in that**, the said device (10) comprising a meteorological database (24), when executing the said instructions, the said calculator draws up the said noise database (20) from the said equipment database (22) and from the said database of legislation (23) and from the said meteorological database (24).

7. A device according to any one of Claims 1 to 6, **characterised in that** the said device (10) comprises a secondary memory (14), the said air route drawn up and the said second representation of the said volumes to be avoided being stored in the said secondary memory (14).

8. An aircraft (1),
**characterised in that** it comprises a device (10) according to any one of Claims 1 to 7.

9. A method for defining an air route (2) and reaching a destination (B) from an air route (2) that comprises at least one segment (3) associated with a flight altitude, using a numerical model of the terrain (21) and a display screen (30), and a means of drawing up (15) the said air route (2),
**characterised in that**:
- an air route (2) which is drawn up is constructed during a step of constructing the air route,
- volumes to be avoided (40), which an aircraft (1) must avoid entering in order not to generate undue noise on the ground at predetermined sites, and the air route (2) which is drawn up are displayed on a display screen (30) and superimposed relative to a first representation of a terrain during a comparison step.

10. A method according to Claim 9,
**characterised in that** an alternative air route (2') is constructed when the air route (2) which is drawn up and the position of the volumes to be avoided (40) are incompatible.

11. A method according to Claim 9,
**characterised in that**:
- the said air route (2) which is drawn up is constructed using the means of drawing up (15),
- a calculator (11) provided with a main memory (13) containing instructions executes the said instructions for displaying volumes to be avoided (40) and the said air route (2) which has been drawn up on the said display screen (30) and superimposed relative to a first representation of a terrain supplied by a numerical model of the terrain (21), the said calculator using a numerical noise database (20) including volumes to be avoided (40) for displaying the said volumes (40) to be avoided on the said representation.

12. A method according to any one of Claims 9 to 11,
**characterised in that**, a segment being associated with a flight altitude, a second, two-dimensional representation of a section of the said volumes to be avoided at the said flight altitude is displayed on the said display screen by a calculator.

13. A method according to Claim 12,
**characterised in that** an item of information (5) relating to a flight schedule to be applied when following the track of a risk segment is displayed on the said display screen (30), the said item of information (5) relating to a flight schedule being extracted from a database of flight schedules (25).

14. A method according to Claim 11,
**characterised in that** the said noise database (20) is drawn up from an equipment database (22) characterising the noise generated by an aircraft and from a database of legislation (23) containing the regulations to be observed in respect of noise emissions.

15. A method according to Claim 14,
**characterised in that** the said noise database (20) is drawn up from an equipment database (22) characterising the noise generated by an aircraft and from a database of legislation (23) containing the regulations to be observed in respect of noise emissions and from a meteorological database (24).
